Europäisches Patentamt

European Patent Office

Office européen des brevets

(19)

(11) Veröffentlichungsnummer: **0 176 748**
B1

(12) # EUROPÄISCHE PATENTSCHRIFT

(45) Veröffentlichungstag der Patentschrift:
26.10.88

(51) Int. Cl.⁴: **A 01 F 25/20**

(21) Anmeldenummer: **85110629.4**

(22) Anmeldetag: **23.08.85**

(54) **Verfahren und Schneidvorrichtung zum Schneiden insbesondere von kompaktiertem Ernte- bzw. Silagegut.**

(30) Priorität: **28.09.84 DE 3435702**

(43) Veröffentlichungstag der Anmeldung:
**09.04.86 Patentblatt 86/15**

(45) Bekanntmachung des Hinweises auf die Patenterteilung:
**26.10.88 Patentblatt 88/43**

(84) Benannte Vertragsstaaten:
**AT BE CH DE FR GB IT LI NL SE**

(56) Entgegenhaltungen:
**EP - A - 0 090 906**
**DE - A - 3 128 316**
**US - A - 3 717 062**

(73) Patentinhaber: **von der Heide, Hans, Ibbenbürener Strasse 17, D-4533 Laggenbeck (DE)**

(72) Erfinder: **von der Heide, Hans, Ibbenbürener Strasse 17, D-4533 Laggenbeck (DE)**

(74) Vertreter: **Patentanwälte Schulze Horn und Hoffmeister, Goldstrasse 36, D-4400 Münster (DE)**

# Beschreibung

Die Erfindung betrifft ein Verfahren zum Schneiden insbesondere von kompaktiertem Ernte- bzw. Silagegut, wobei mittels wenigstens eines Messers mit beim Schneidvorgang in ihrer Längsrichtung hin- und herbewegter sowie eine fortlaufende Schnittbewegung in Richtung einer Schnittebene ausführender Klinge Schnitte durch das Gut geführt und Tranchen davon abgetrennt werden.

Bei Schneidvorgängen der genannten Art, (z.B. DE-A-3 128 316), wobei frisch kompaktiertes oder abgelagertes, faseriges Naturprodukte enthaltendes Ernte- bzw. Silagegut vom Paket oder vom Haufen in Tranchen aufgeschnitten wird, ergeben sich beträchtliche, unerwartete Schwierigkeiten. Weil für den Schnitt eines relativ grossen Futtermittelpaketes oder Haufwerkes verhältnismässig lange, einseitig geführte, nach Art einer Stichsäge mit Schneidzähnen versehene Messer verwendet werden, liess es sich in der Praxis bisher nicht vermeiden, dass die Messer beispielsweise einseitig aus der vorgegebenen Schnittebene herausliefen und sich zudem im Schnittspalt verzwängten. Dies führte vielfach zu Beschädigungen der Schneidvorrichtung, zum Bruch der Messer oder zumindest zu sehr starken Abnutzungserscheinungen.

Der Erfindung liegt die Aufgabe zugrunde, ein Verfahren und eine Schneidvorrichtung anzugeben, durch welche die in der Praxis festgestellten Schwierigkeiten überwunden werden. Das Verfahren und die Schneidvorrichtung sollen bei allen vorkommenden Arten von Ernte- bzw. Silagegut eine sichere, störungsempfindliche Ausführung von Schnitten gewährleisten und darüberhinaus möglichst unkompliziert und einfach in der Handhabung sein.

Die Lösung der gestellten Aufgabe gelingt bei einem Verfahren der eingangs genannten Art mit der Erfindung dadurch, dass die Klinge beim Schneidvorgang mit gegenüber der Schnittebene nach beiden Seiten hin spitze Winkel ergebenden Schwenkbewegungen um ihre Längsachse geführt wird.

Das erfindungsgemässe Verfahren ergibt in sehr überraschender Weise einen problemlosen Schneidvorgang selbst bei äusserst schwierig zu schneidendem frischkompaktiertem oder abgelagertem, feuchtem, faserigem Ernte- bzw. Silagegut. Mit Vorteil wird dabei ein Verlaufen des Messers oder Messerpaares aus der vorgegebenen Schnittebene ebenso vermieden wie das Zwängen oder Verklemmen im langen Schnittkanal.

Eine vorteilhafte Ausgestaltung des Verfahrens sieht vor, dass die Klinge in taumelnden Schwenkbewegungen geführt wird.

Mit Vorteil wird hierbei erreicht, dass das Messer oder Messerpaar sich einen Schnittspalt freischneidet, der breiter ist als das oder die Messer, wodurch Verklemmen oder Verlaufen des Messers bzw. Messerpaares wirksam verhindert wird. Weil somit die Messer über die gesamte Schnittlänge in der Schnittebene freigehen, wird trotz des verbreiterten Schnittspaltes Arbeitsenergie gespart und infolgedessen auch der Verschleiss beträchtlich gemindert.

Weitere vorteilhafte Ausgestaltungen des Verfahrens sind entsprechend den Merkmalen der Ansprüche 3 bis 6 vorgesehen.

Eine Schneidvorrichtung zum Tranchieren von kompaktem Ernte- bzw. Silagegut, zur Durchführung des Verfahrens nach der Erfindung, mit wenigstens einem mittels Führungs- und Antriebsmitteln in ihrer Längsachse hin- und hergehend sowie in Richtung der Schnittebene fortlaufend bewegbar geführten, eine Klinge aufweisenden Messers, ist dadurch gekennzeichnet, dass diese zusätzliche Führungs- und Antriebsmittel aufweist, durch welche die Klinge beim Schneidvorgang in Schwenkbewegung um ihre Längsachse versetzbar ist.

Eine Ausgestaltung der Schneidvorrichtung sieht vor, dass diese zwei Rücken an Rücken geführte, gegenläufig bewegbare, ein Messerpaar bildende Messer sowie Führungs- und Antriebsmittel aufweist, durch welche das Messerpaar beim Schneidvorgang in Schwenkbewegungen um seine Längsachse versetzbar geführt und angetrieben ist.

Die Erfindung wird in Zeichnungen in einer bevorzugten Ausführungsform gezeigt, wobei aus den Zeichnungen weitere vorteilhafte Einzelheiten der Erfindung entnehmbar sind.

Die Zeichnungen zeigen im einzelnen:

Figur 1 eine Schneidvorrichtung, in Seitenansicht, teilweise im Schnitt,

Figur 2 eine Schneidvorrichtung, in Draufsicht von hinten, sowie teilweise im Schnitt, aus einer Blickrichtung entsprechend Pfeil II in Figur 1.

Figur 3 eine Schneidvorrichtung in Vorderansicht, aus einer Blickrichtung entsprechend Pfeil III in Figur 1.

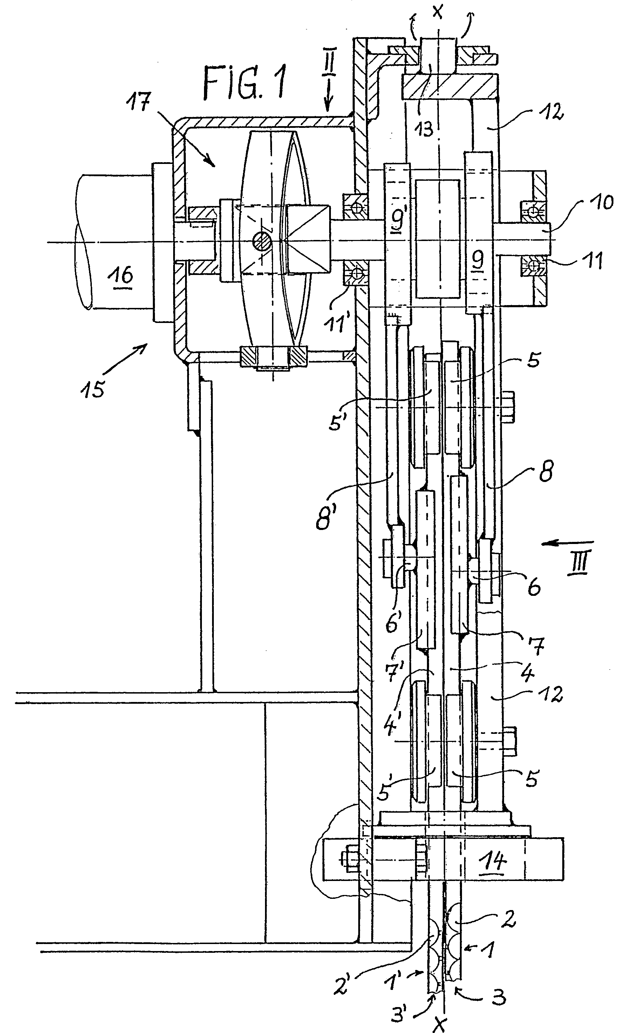

Die Schneidvorrichtung gemäss Figur 1 weist zwei Rücken an Rücken parallel geführte Messer 1, 1' auf. Diese besitzen Klingen 3, 3', die vorzugsweise beidseitig mit Schneidzähnen 2, 2' ausgebildet sind. Die Messer besitzen Führungsenden 4, 4', mit denen sie in mit Spurkränzen ausgebildeten Führungsrollen 5, 5' zur Ausführung geradliniger gegenläufiger Bewegungen leichtgängig geführt sind. An den Führungsenden 4, 4' sind mit Pleuelzapfen 6, 6' ausgebildete Verstärkungen 7, 7' angeordnet. An den Pleuelzapfen 6, 6' sind Pleuelstangen 8, 8' angelenkt, die anderen Endes mit Exzentern 9, 9' einer Kurbelwelle 10 in Verbindung stehen.

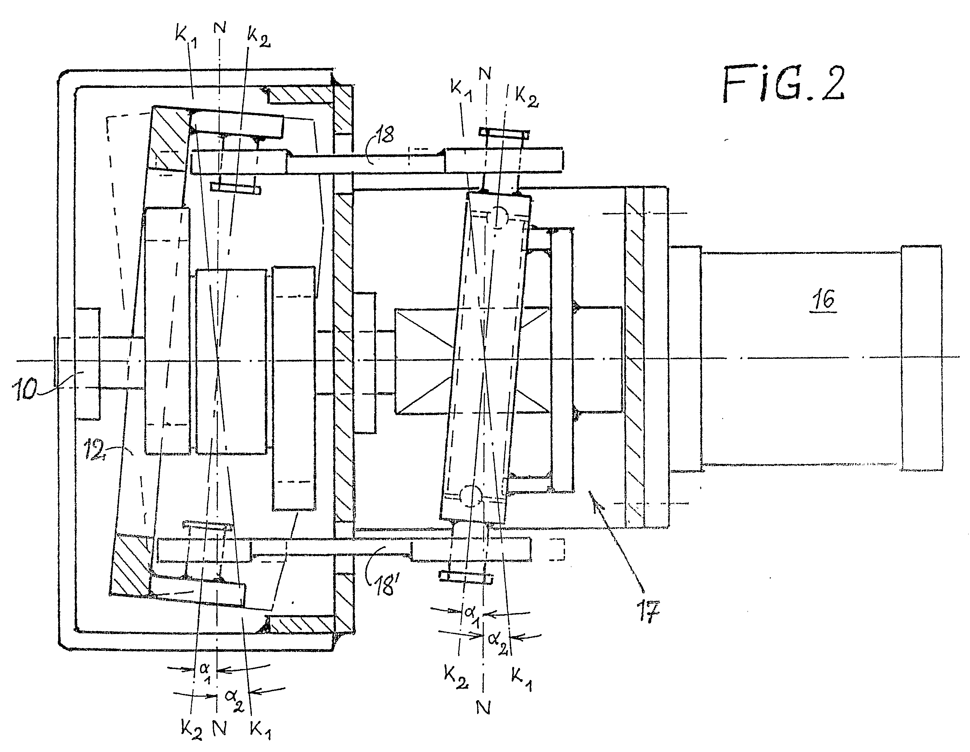

Diese Kurbelwelle ist in den Lagern 11, 11' gelagert. Die Messer 1, 1', die Führungsrollen 5, 5' sowie der gesamte Exzenterantrieb 6, 6' bis 11, 11' sind auf einer Schwinge 12 angeordnet, die um die Achse x–x verschwenkbar ist. Hierfür sind zwei Lager vorgesehen, nämlich im oberen Bereich der betrachteten Darstellung das Zapfenlager 13 und im unteren Bereich der Darstellung das radiale Wälzlager 14, von denen lediglich die Ansicht des Gehäuses zu erkennen ist. Die rein schematisch dargestellte Antriebsanordnung 15 der Kurbelwelle 10 weist den Motor 16 auf. Zwischen diesem und der Kurbelwelle 10 ist eine Einrichtung 17 zur Erzeugung einer rotierenden Taumelbewegung angeordnet. Die Ausbildung der genannten Einrichtung 17 zur Erzeugung einer rotierenden Taumelbewegung steht im Belieben des Konstrukteurs und kann mit an sich bekannten Mitteln gelöst werden, weshalb auf eine entsprechende Beschreibung verzichtet wird. Die Funktion dieser rotierenden Taumeleinrichtung ist eine solche, dass die Kurbelwelle 10 bei jeder vollen Umdrehung eine Schwenkbewegung aus ihrer horizontalen Mittellage in eine Schräglage nach beiden Seiten vollzieht, wie dies aus der schematischen Darstellung in Figur 2 ersichtlich ist. Darin ist die Normallage entsprechend der strichpunktierten, dünnen Linie mit N–N gekennzeichnet, während die beiden extremen Kipplagen mit K1–K1 und K2–K2 bezeichnet sind. Zwischen der Normallinie N–N, die auch zugleich der vorgesehenen Schnittebene entspricht, ergibt sich bei der Schwenkbewegung der Klingen 3, 3' mit Hilfe der schwenkbar gelagerten Schwinge 12 und der Einrichtung 17 zur Erzeugung einer rotierenden Taumelbewegung bei der Schwenkbewegung ein maximaler Schwenkwinkel $\alpha_1$, $\alpha_2$ von etwa 10°.

In Figur 1, 2 und 3 sind im übrigen gleiche Funktionselemente mit gleichen Bezugsziffern bezeichnet und ist insbesondere in Figur 2 die Einrichtung 17 zur Erzeugung einer rotierenden Taumelbewegung in einer möglichen Ausführungsform dargestellt, wobei zwischen dieser und der Schwinge 12 an jeweils beiden Enden gelenkig angelenkte Arme 18, 18' zur Übertragung der Taumelbewegung vorgesehen sind.

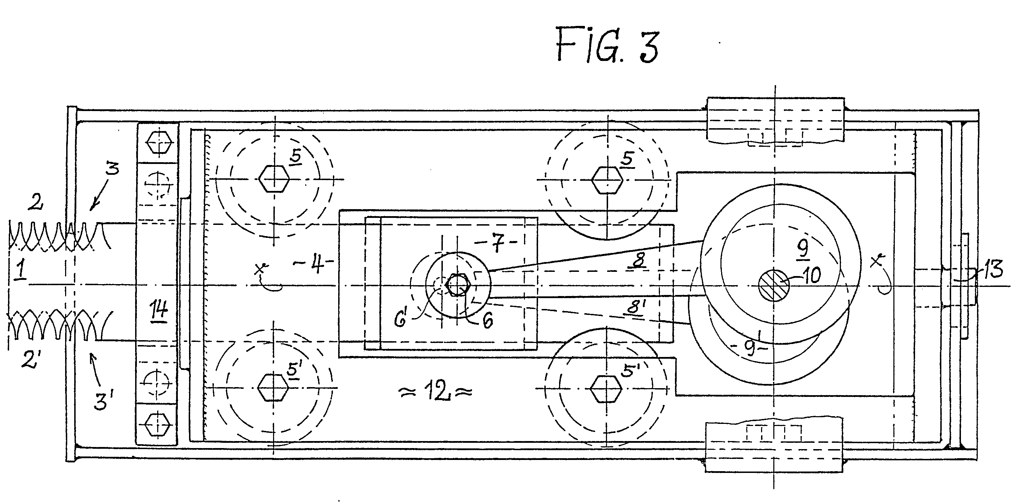

Eine sehr übersichtliche Darstellung des funktionellen Aufbaues der Schneidvorrichtung ergibt sich auch aus der Seitenansicht in Figur 3. Diese zeigt die Führung der Führungsenden 4, 4' der Messer 1, 1' in den Führungsrollen 5, 5' sowie die Anordnung der Verstärkungen 7, 7' mit den Pleuelzapfen 6, 6' und die Anordnung und Funktion der Pleuelstangen 8, 8', die in bekannter Weise im Zusammenwirken mit den Kurbelwellen-Exzentern 9, 9' als Kurbeltriebe wirkend die Messer 1, 1' in gegenläufige lineare Bewegungen bei Umdrehung der Kurbelwelle 10 versetzen. Ferner ist aus der Darstellung die Anordnung der Schwinge 12 in den beiden Lagern 13 und 14 ersichtlich, worin sie um die Achse x–x schwenkbar gelagert ist.

Das gezeigte Ausführungsbeispiel einer Schneidvorrichtung nach der Erfindung ist lediglich beispielhaft gedacht, weil zur funktionellen Ausbildung der genannten Elemente der Schneidvorrichtung eine Vielzahl von im Belieben des Konstrukteurs liegenden Konstruktionen denkbar ist. Das Funktionsprinzip der Schneidvorrichtung nach der Erfindung beruht dagegen im Kern in der Anordnung um die x–x-Achse schwenkbarer und von einer Schwenkeinrichtung während des Schneidvorganges aus der Schnittebene N–N in Kipplagen K1–K1 bzw. K2–K2 taumelnd aus der Schnittebene N–N kippbarer Messer 1, 1'.

Weil der Schneidvorgang nach der Erfindung in sehr überraschender Weise die mit starrgeführten Messern in der Praxis sich ergebenden Schwierigkeiten problemlos überwindet, wird mit dem Verfahren und der Schneidvorrichtung nach der Erfindung die eingangs gestellte Aufgabe in optimaler Weise gelöst.

**Patentansprüche**

1. Verfahren zum Schneiden insbesondere von kompaktiertem Ernte- bzw. Silagegut, wobei mittels wenigstens eines Messers mit beim Schneidvorgang in ihrer Längsrichtung hin- und herbewegter sowie eine fortlaufende Schnittbewegung in Richtung einer Schnittebene ausführender Klinge Schnitte durch das Gut geführt und Tranchen davon abgetrennt werden, dadurch gekennzeichnet, dass die Klinge beim Schneidvorgang mit gegenüber der Schnittebene (x–x) nach beiden Seiten hin spitze Winkel ($\alpha_1$, $\alpha_2$) ergebenden Schwenkbewegungen um ihre Längsachse geführt wird.

2. Verfahren nach Anspruch 1, dadurch gekennzeichnet, dass die Klinge in taumelnder Schwenkbewegungen geführt wird.

3. Verfahren nach Anspruch 1 und 2, dadurch gekennzeichnet, dass die Klinge in periodisch sich wiederholenden Taumelbewegungen geschwenkt wird.

4. Verfahren nach einem der Ansprüche 1 bis 3, dadurch gekennzeichnet, dass in der Schnittebene eine Schnittfläche hergestellt wird, die in Wellenform verläuft.

5. Verfahren nach einem der Ansprüche 1 bis 3, dadurch gekennzeichnet, dass der sich bei der Schwenkbewegung der Klinge zu beiden Seiten der Schnittebene einstellende Schwenkwinkel ($\alpha_1$, $\alpha_2$) maximal 10° beträgt.

6. Verfahren nach den Ansprüchen 1 bis 5, dadurch gekennzeichnet, dass der Schnitt mittels zweier Rücken an Rücken gegenläufig geführter, hin- und her sowie in Schnittrichtung bewegter, ein Messerpaar bildender Messer durchgeführt wird, wobei das Messerpaar während der Schneidbewegung in taumelnde Schwenkbewegungen um eine Längsachse versetzt wird.

7. Schneidvorrichtung zum Tranchieren insbesondere von kompaktem Ernte- bzw. Silagegut, zur Durchführung des Verfahrens nach den Ansprüchen 1 bis 6, mit wenigstens einem mittels Führungs- und Antriebsmitteln in ihrer Längsrichtung hin- und hergehend sowie in Richtung der Schnittebene fortlaufend bewegbar geführten, eine Klinge aufweisenden Messer, dadurch gekennzeichnet, dass diese zusätzliche Führungs- und Antriebsmittel (12, 13, 14, 17, 18) aufweist, durch welche die Klinge (3) beim Schneidvorgang in Schwenkbewegungen um ihre Längsachse (x–x) versetzbar ist.

8. Schneidvorrichtung nach Anspruch 7, dadurch gekennzeichnet, dass diese zwei Rücken an Rücken geführte, gegenläufig bewegbare, ein Messerpaar bildende Messer (1, 1') sowie Führungs- und Antriebsmittel (12, 13, 14, 17, 18) aufweist, durch welche das Messerpaar (1, 1') beim Schneidvorgang in Schwenkbewegungen um seine Längsachse (x–x) versetzbar geführt und angetrieben ist.

## Revendications

1. Procédé pour couper notamment des produits de récolte ou des produits ensilés compactés, dans lequel des coupes sont faites dans le produit et des tranches sont séparées de celui-ci, au moyen d'au moins un couteau avec lame exécutant lors du processus de coupe un mouvement de va-et-vient sur sa direction longitudinale ainsi qu'un mouvement de coupe continu dans la direction du plan de coupe, caractérisé par le fait que, lors du processus de coupe, la lame est conduite de manière à accomplir autour de son axe longitudinal des mouvements d'oscillation formant par rapport au plan de coupe (x–x), des deux côtés de celui-ci, des angles aigus ($\alpha_1$, $\alpha_2$).

2. Procédé selon la revendication 1, caractérisé par le fait que la lame est conduite selon des mouvements d'osciallation avec nutation.

3. Procédé selon les revendications 1 et 2, caractérisé par le fait que la lame est déplacée par pivotement selon des mouvements de nutation se répétant périodiquement.

4. Procédé selon l'un des revendications 1 à 3, caractérisé par le fait qu'une surface de coupe ayant une forme d'onde est réalisée dans le plan de coupe.

5. Procédé selon l'une des revendications 1 à 3, caractérisé par le fait que l'angle d'oscillation ($\alpha_1$, $\alpha_2$) de part et d'autre du plan de coupe, lors du mouvement d'oscillation de la lame, est de 10° au maximum.

6. Procédé selon les revendications 1 à 5, caractérisé par le fait que la coupe est effectuée au moyen de deux couteaux, constituant une paire de couteaux, disposés dos à dos, soumis à des mouvements de va-et-vient opposés, et déplacés dans la direction de la coupe, la paire de couteaux étant soumise, pendant le mouvement de coupe, à des mouvements oscillants de nutation autour de son axe longitudinal.

7. Dispositif de coupe, notamment pour découper des produits de récolte ou des produits ensilés compactés, pour mettre en œuvre le procédé selon les revendications 1 à 6, comportant au moins un couteau présentant un lame et accomplissant, grâce à des moyens de guidage et d'entraînement, un va-et-vient sur sa direction longitudinale, et conduit de manière à être déplacé selon un mouvement continu dans la direction du plan de coupe, caractérisé par le fait qu'il présente des moyens de guidage et d'entraînement supplémentaires (12, 13, 14, 17, 18) par lesquels, lors du processus de coupe, la lame (3) peut être soumise à des mouvements d'oscillation autour de son axe longitudinal (x–x).

8. Dispositif de coupe selon la revendication 7, caractérisé par le fait qu'il présente deux couteaux (1, 1') constituant une paire de couteaux guidés dos à dos, mobiles dans des directions opposées, et des moyens de guidage et d'entraînement (12, 13, 14, 17, 18) par lesquels, lors du processus de coupe, la paire de couteaux (1, 1') est entraînée et soumise à des mouvements d'oscillation autour de son axe longitudinal (x–x).

## Claims

1. A method of cutting more particularly compacted crops and silage material, cuts being made therethrough and swathes thereof parted off by means of at least one cutter comprising a blade which reciprocates lengthwise during cutting and makes a continuous cutting movement in the direction of a cutting plane, characterised in that the blade is guided in cutting by pivoting movements around its longitudinal axis, such movements resulting in acute angles ($\alpha_1$, $\alpha_2$) relatively to the cutting plane (x–x) on both sides.

2. A method according to claim 1, characterised in that the blade makes wobbling pivoting movements.

3. A method according to claims 1 and 2, characterised in that the blade is pivoted in periodically repeating wobble movements.

4. A method according to any of claims 1–3, characterised in that a wavy cut surface is produced in the cutting plane.

5. A method according to any of claims 1–3, characterised in that the pivoting angle ($\alpha_1$, $\alpha_2$ arising on either side of the cutting plane in the pivoting of the blade is at most 10°.

6. A method according to claims 1–5, characterised in that cutting is performed by means of two cutters which are guided in back-to-back relationship in opposite directions, reciprocate in the cutting direction and form a pair of cutters, such pair being wobblingly pivoted around its longitudinal axis during the cutting movement.

7. A cutting device for slicing up more particularly compact crops and silage material, of use for performing the method according to claims 1–6, the device having at least one cutter which comprises a blade and which is reciprocated lengthwise and continuously guided in its movement in the direction of the cutting plane, by guiding and driving means, characterised in that the blade has additional guiding and driving means (12–14, 17, 18) which impart pivoting motions to the blade around its longitudinal axis (x–x) during cutting.

8. A device according to claim 7, characterised in that it has: two cutters (1, 1') which are guided back-to-back in opposite directions and which form a cutter pair; and guiding and driving means (12–14, 17, 18) for guiding and driving the cutter pair (1, 1') in pivoting movements around the longitudinal axis (x–x) thereof during cutting.

FIG. 1

FIG.2

# FIG. 3

0 176 748